# DEMANDE DE BREVET EUROPEEN

(11) **EP 4 793 110 A1**
(43) Date de publication de la demande: **19.08.2026**
(21) Numéro de dépôt: 25315051.0
(22) Date de dépôt: 17.02.2025
(51) Int. Cl.: B60R 21/215, B60R 21/2165

(54) **VOLET D'AIRBAG POUR PLANCHE DE BORD**

(71) Demandeur: SMRC Automotive Holdings Netherlands B.V., 1101 BA Amsterdam (NL)
(72) Inventeur: AUTEM, Laurent, 62860 Sains Les Marquion (FR); FORGERON, Jerome, 62220 Carvin (FR); SOUFFLET, Jeremy, 62440 Harnes (FR)
(74) Mandataire: Ipsilon

(57) **Abrégé**

L'invention se rapporte à une planche de bord (1) intégrant un volet (2), la planche de bord (1) comprenant une structure support (11) rigide et un revêtement superposé sur cette structure support (11) combinant une couche de matière élastique compressible avec une couche de revêtement de surface, caractérisée en ce que le volet (2) comprend :
- un panneau support (21) du revêtement, ce panneau (21) étant relié, directement ou indirectement, au reste de la planche de bord (1) par un moyen charnière (3),
- une paroi de connexion (22) positionnée le long d'une portion du bord (211) du panneau support (21) situé à l'opposé du moyen charnière (3), cette paroi (22) étant configurée pour interagir avec une surface d'épaisseur (13) de la planche de bord (1) positionnée en vis-à-vis et disposée dans le prolongement d'au moins une partie du canal d'airbag.

## Description

La présente invention se rapporte au domaine des planches de bord intégrant un volet d'airbag et plus particulièrement au domaine des planches de bord comprenant un revêtement d'épaisseur importante.

Lors de la construction d'un habitacle de véhicule, les surfaces intérieures de l'habitacle sont classiquement aménagées pour répondre à un certain niveau de confort ou d'esthétisme, en particulier dans le cadre de véhicules familiaux ou de véhicules répondant à des niveaux de standing supérieurs. Ces aménagements consistent notamment en l'application, sur les différentes parties rigides qui forment la structure solide de l'habitacle, de revêtements dont l'épaisseur et l'élasticité sont suffisantes pour éviter que le toucher des surfaces de l'habitacle ne fasse percevoir une rigidité de la surface intérieure de l'habitacle voire même pour qu'il apporte la sensation d'un revêtement matelassé. L'obtention d'un tel rendu est généralement réalisée par la fixation d'un revêtement comprenant une couche de type mousse sur la surface de la structure solide orientée vers l'intérieur de l'habitacle de sorte que cette structure solide remplit un rôle de support.

Dès lors qu'une partie de la surface intérieure de l'habitacle telle la planche de bord du véhicule, masque une trappe configurée pour l'éjection d'un coussin d'airbag, l'épaisseur de revêtement moussé disposé sur la surface intérieure de l'habitacle est à même de masquer la présence d'une ouverture de canal d'airbag aux passagers du véhicule. De plus, grâce à l'épaisseur élastique de sa structure, le revêtement est en mesure d'absorber les éventuelles variations de reliefs qu'impose une trappe de canal d'airbag sur une planche de bord, de façon à fournir une homogénéité de la surface intérieure de l'habitacle. Toutefois, la présence d'un épais revêtement élastique disposé sur la planche de bord par-dessus l'ouverture des volets d'airbag en extrémité du canal d'éjection, est susceptible de faire obstruction à l'ouverture de ces volets et au déploiement du coussin d'airbag. En effet, sous l'effort exercé par les volets et le gonflement du coussin d'airbag, le revêtement positionné sur la surface de la structure support est contraint de se déchirer pour permettre le déploiement du coussin d'airbag. Cependant, lorsque le revêtement intègre une couche de revêtement de type mousse, c'est-à-dire une couche présentant également une élasticité, la déchirure est susceptible de ne pas pouvoir s'opérer, d'une part, sans difficulté et, d'autre part, de façon parfaitement nette de sorte que l'expulsion et la vitesse de déploiement du coussin d'airbag sont susceptibles de s'en trouver altérées, impactant alors le niveau de sécurité pour les passagers du véhicule.

La présente invention a pour but de pallier ces inconvénients en proposant notamment une solution qui permette de ne pas altérer le niveau d'exigence attendu pour le déploiement d'un coussin d'airbag au travers d'une planche de bord, tout en conservant les qualités esthétiques et de confort susceptibles d'être apportés par un revêtement d'épaisseur élastique disposé sur la surface de la structure support.

L'invention se rapporte ainsi à une planche de bord intégrant au moins un volet d'airbag, la planche de bord comprenant, d'une part, une structure support rigide et, d'autre part, un revêtement superposé sur cette structure support, le revêtement comprenant au moins une couche de matière élastique compressible et une couche de revêtement de surface, caractérisée en ce que le volet d'airbag de la planche de bord comprend :
- un panneau support qui porte le revêtement de la planche de bord positionné au niveau du volet d'airbag, ce panneau support étant relié, directement ou indirectement, au reste de la planche de bord par au moins un moyen charnière,
- une paroi de connexion positionnée le long d'au moins une portion du bord du panneau support situé à l'opposé du moyen charnière par rapport au panneau support, cette paroi de connexion étant configurée pour interagir avec une surface d'épaisseur de la planche de bord positionnée en vis-à-vis de la paroi de connexion et disposée dans le prolongement d'au moins une partie du canal d'airbag.

L'invention sera mieux comprise, grâce à la description ci-après, qui se rapporte aux modes de réalisation préférés, donnés à titre d'exemples non limitatifs, et expliqués avec référence aux dessins schématiques annexés, dans lesquels :
[Fig. 1] est une illustration schématique d'un exemple de cinématique d'ouverture de structure pour une planche de bord selon l'invention,
[Fig. 2] est une illustration schématique d'un exemple de vue en section d'une planche de bord selon l'invention,
[Fig. 3] est une illustration schématique d'un exemple de jonction entre un volet et le reste de la planche de bord dans le cadre d'une planche de bord selon l'invention,

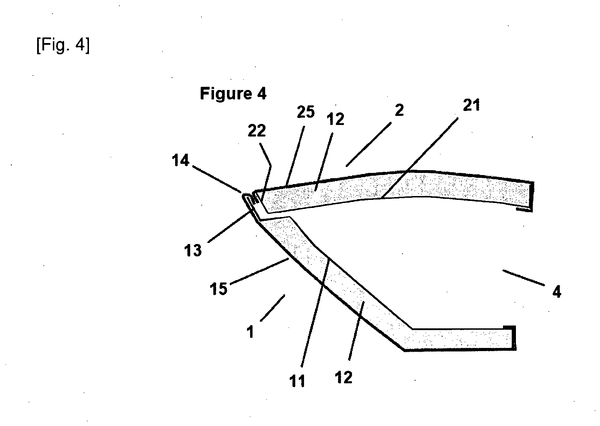

[Fig. 4] est une illustration schématique d'un autre exemple de vue en section d'une planche de bord selon l'invention.

L'invention se rapporte ainsi à une planche de bord 1 intégrant au moins un volet 2 d'airbag, la planche de bord 1 comprenant, d'une part, une structure support 11 rigide et, d'autre part, un revêtement 12 superposé sur cette structure support 11, le revêtement 12 comprenant au moins une couche de matière élastique compressible 121 et une couche de revêtement de surface 122, caractérisée en ce que le volet 2 d'airbag de la planche de bord 1 comprend :
- un panneau support 21 qui porte le revêtement 12 de la planche de bord 1 positionné au niveau du volet 2 d'airbag, ce panneau support 21 étant relié, directement ou indirectement, au reste de la planche de bord 1 par au moins un moyen charnière 3,
- une paroi de connexion 22 positionnée le long d'au moins une portion du bord 211 du panneau support 21 situé à l'opposé du moyen charnière 3 par rapport au panneau support 21, cette paroi de connexion 22 étant configurée pour interagir avec une surface d'épaisseur 13 de la planche de bord 1 positionnée en vis-à-vis de la paroi de connexion 22 et disposée dans le prolongement d'au moins une partie du canal d'airbag 4.

L'invention fait ainsi intervenir un volet 2 d'airbag réalisé sous la forme d'un panneau 21 qui porte une partie du revêtement 12 de la planche de bord 1 et dont une partie de son bord 211 comprend une paroi de connexion 22 configurée pour coopérer avec une surface de la planche de bord 1 disposée en vis-à-vis de cette paroi de connexion 22. Alors que le panneau support 21 du volet 2 est disposé selon un arrangement sensiblement plan et parallèle à la disposition du revêtement 12 et de ses différentes couches 121, 122 sur la planche de bord 1, la paroi de connexion 22 du volet 2 est disposée selon un arrangement sensiblement plan comprenant au moins une composante disposée en section par rapport au revêtement 12 et à ses différentes couches 121, 122. Selon cet arrangement, la paroi de connexion 22 est disposée à l'intérieur d'une partie de l'épaisseur du revêtement 12 et en particulier à l'intérieur de la partie de l'épaisseur du revêtement 12 la plus proche et au contact avec la surface de la structure support 11 de la planche de bord 1. Classiquement, cette paroi de connexion 22 présente une épaisseur similaire à l'épaisseur du panneau support 21 de sorte que la paroi de connexion 22 présente une forme aplatie similaire à celle d'une lame. De façon préférée, cette paroi de connexion 22 présente une épaisseur inférieure, voire légèrement inférieure, à l'épaisseur du panneau. Cette paroi de connexion 22 comprend au moins un bord libre 222 positionné à distance du panneau support 21 du volet 2. La paroi de connexion 22 positionnée dans l'épaisseur du revêtement 12 se trouve alors masquée par la portion du revêtement 12 située à proximité de la surface de la planche de bord 1, telle que au moins la couche de revêtement de surface 122.

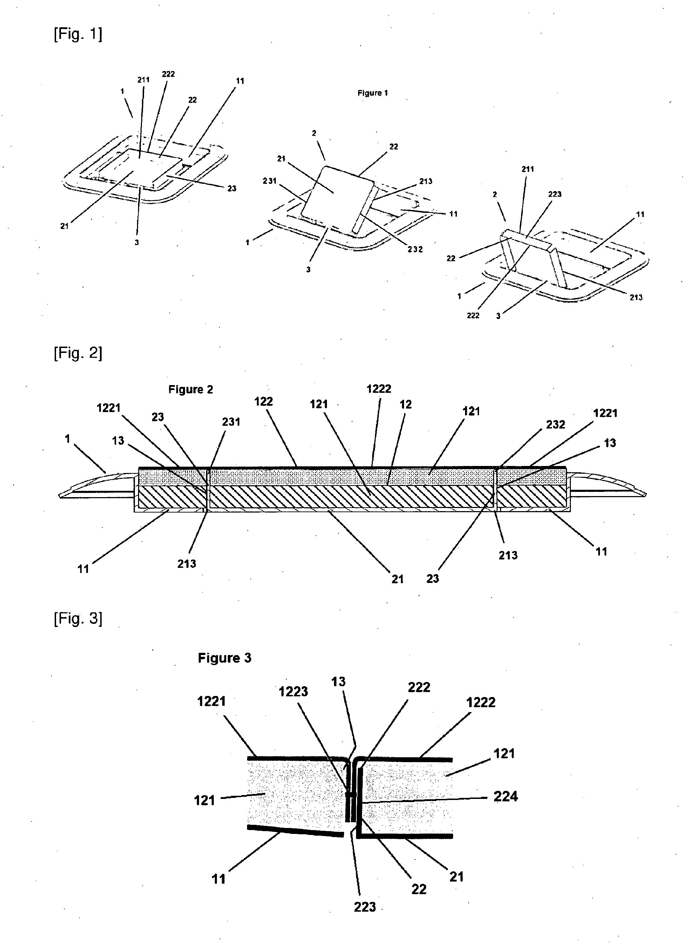

Dans la planche de bord 1 selon l'invention, la paroi de connexion 22 du volet 2 est disposée en travers d'une portion de l'épaisseur du revêtement 12 qui recouvre la surface de la structure support 11 de la planche de bord 1. Cette paroi de connexion 22 du volet 2 présente ainsi un arrangement sensiblement plan et polygonal qui comprend au moins un bord confondu avec le bord 211 du panneau support 21 du volet 2. Les surfaces respectives de la paroi de connexion 22 du volet 2 se trouvent alors disposées, directement ou indirectement, en contact avec au moins une partie de l'épaisseur du revêtement 12. Selon un exemple de construction préféré, la surface 224 de la paroi de connexion 22 orientée du côté du volet 2 est en contact direct avec une ou plusieurs des couches du revêtement 12 porté par le panneau support 21. La surface de 223 de la paroi de connexion 22 orientée du côté opposé au volet 2 est positionnée en vis-à-vis de l'épaisseur du revêtement 12 porté par la structure support 11 pour coopérer, directement ou indirectement, avec celle-ci. Cette partie de l'épaisseur du revêtement 12 portée par la structure support 11 de la planche de bord 1 et non par le panneau support 21 du volet 2, réalise une surface d'épaisseur 13 destinée à coopérer, directement ou indirectement, avec la paroi de connexion 22 du volet 2. De façon préférée, cette surface d'épaisseur 13 est disposée dans un plan sensiblement parallèle au plan de positionnement de la paroi de connexion 22 du volet 2 lorsque le volet 2 est en position d'obturation du canal d'airbag 4. De même, de façon préférée, cette surface d'épaisseur 13 est disposée de façon à être sensiblement positionnée dans la continuité d'au moins une partie de la surface intérieure du canal d'airbag 4. La coopération, directe ou indirecte, entre la surface d'épaisseur 13 et la paroi de connexion 22 du volet 2 positionnée en vis-à-vis, telle qu'illustrée sur la figure 3, est configurée pour maintenir, en absence de déploiement du coussin d'airbag, le volet 2 en position de fermeture du canal d'airbag 4, de façon à assurer une homogénéité de la surface de la planche de bord 1 visible par un passager de l'habitacle.

Selon un exemple se rapportant à une variante de construction de la planche de bord 1 selon l'invention, d'une part, la paroi de connexion 22 du volet 2 comprend une hauteur ajustée pour être en contact contre la au moins une couche de matière élastique compressible 121 portée par le panneau support 21 et, d'autre part, au moins une portion d'un bord libre 222 de cette paroi de connexion 22 est au plus en contact contre la face orientée vers le panneau support 21 de la couche de revêtement de surface 122. Selon cette variante de construction, la paroi de connexion 22 disposée dans l'épaisseur du revêtement 12 opère une séparation entre, d'une part, une partie de la couche de matière élastique compressible 121 portée par le panneau support 21 et, d'autre part, une partie de la couche de matière élastique compressible 121 portée par la structure support 11 de la planche de bord 1. Cette séparation permet ainsi d'imposer un découpage préalable d'une partie du revêtement 12 au niveau d'une partie de la jonction entre le volet 2 et le reste de la planche de bord 1 de sorte que, lors du déploiement du coussin d'airbag, la portion d'épaisseur du revêtement 12 destinée à être déchirée ou sectionnée s'en trouve réduite. La déchirure du revêtement 12 s'en trouve alors facilitée. De plus, selon cette même variante de construction, le bord libre 222 de la paroi de connexion 22 disposé à l'intérieur de l'épaisseur du revêtement 12 et situé à distance du panneau support 21 du volet 2, est arrangé pour être masqué par au moins la couche de revêtement de surface 122. Compte tenu de la forme aplatie de la paroi de connexion 22, ce bord libre 222 réalise ainsi un arrangement sensiblement similaire à celui du tranchant ou du fil d'une lame apte, sous l'effet d'un effort du volet 2 en pivotement ou en bascule, à déchirer, voire à sectionner ou couper, efficacement le revêtement 12 qui recouvre ce bord libre 222 de la paroi de connexion 22 du volet 2.

Selon un exemple se rapportant à une autre variante de construction de la planche de bord 1 selon l'invention et susceptible d'être combinée avec l'une ou l'autre des variantes précédemment détaillées, la paroi de connexion 22 est prolongée par des parois latérales 23 respectivement positionnées le long d'au moins une portion de chacun des bords latéraux 213 du panneau support 21 situés de part et d'autre du bord 211 du panneau support 21 associé à la paroi de connexion 22. Selon cette variante de construction, chacune des parois latérales 23 présente un arrangement sensiblement plan avec une épaisseur de paroi sensiblement similaire à celle de la paroi de connexion 22. De façon complémentaire, chacune des parois latérales 23 présente une hauteur respective similaire, voire identique, à celle de la paroi de connexion 22. La jonction entre chacune de ces parois latérales 23 et la paroi de connexion 22 réalise un angle similaire à l'angle que réalisent, entre eux, les bords 211, 213 du panneau support 21 qui portent ces parois latérales 23 et la paroi de connexion 22. Dans le cadre de cette variante de construction, chacune de ces parois latérales 23 est respectivement disposée selon un arrangement sensiblement plan comprenant au moins une composante disposée en section par rapport au revêtement 12 et à ses différentes couches 121, 122. Chacune de ces parois latérales 23 se trouve ainsi positionnée au sein d'une partie de l'épaisseur du revêtement 12 et en particulier au niveau d'une partie de l'épaisseur du revêtement 12 qui est au contact avec la surface de la structure support 11 de la planche de bord 1. Cette partie de l'épaisseur du revêtement 12 réalise ainsi une surface d'épaisseur 13 de la planche de bord 1 en vis-à-vis de laquelle une surface de la paroi latérale 23 se trouve ainsi positionnée. Chacune de ces parois latérales 23 comprend un bord libre 231, 232 disposé à l'intérieur de l'épaisseur du revêtement 12 et situé à distance du panneau support 21 du volet 2. De façon préférée, chacun de ces bords libres 231, 232 présente une extrémité positionnée de niveau avec l'extrémité du bord libre 222 de la paroi de connexion 22 avec laquelle la paroi latérale 23 est en jonction avec la paroi connexion 22. Comme pour le bord libre 222 de la paroi de connexion 22, les bords libres 231, 232 respectifs de chacune des parois latérales 23 sont arrangés pour être masqués par au moins la couche de revêtement de surface 122. De façon similaire à la paroi de connexion 22, compte tenu de la forme aplatie des parois latérales 23, les bords libres 231, 232 réalisent également des arrangements sensiblement similaires à celui du tranchant ou du fil d'une lame qui, sous l'effet d'un effort du volet 2 en pivotement ou en bascule, sont configurés pour déchirer, voire sectionner ou couper, efficacement le revêtement 12 disposé par-dessus les bords libres 231, 232 respectifs des parois latérales 23 du volet 2.

Selon un exemple se rapportant à une autre variante de construction de la planche de bord 1 selon l'invention et susceptible d'être combinée avec la variante précédemment détaillée, les parois latérales 23 sont disposées dans des plans respectifs sensiblement parallèles entre eux et perpendiculaires au plan moyen de la paroi de connexion 22, de sorte que l'ensemble formé par les deux parois latérales 23 et la paroi de connexion 22 soit disposé le long de différents bords 211, 213 d'un panneau support 21 du volet 2 qui présente une forme sensiblement rectangulaire.

Selon un exemple se rapportant à une autre variante de construction de la planche de bord 1 selon l'invention et susceptible d'être combinée avec l'une ou l'autre des variantes précédemment détaillées, la jonction entre la surface 223 de la paroi de connexion 22 et la surface d'épaisseur 13 de la planche de bord 1 positionnée en vis-à-vis comprend au moins un contact, direct ou indirect, en pression de ces deux surfaces 13, 223. Selon cette variante de construction, la paroi de connexion 22 est maintenue en position contre la surface d'épaisseur 13 par la seule pression exercée entre la paroi 22 et la surface d'épaisseur 13. Cette pression est susceptible d'être notamment obtenue par le matériau élastique de la couche de matière élastique compressible 121 du revêtement 12 disposée de part et d'autre de la paroi de connexion 22 et qui, par sa constitution de type moussée, appuie contre chacune des surfaces de 223, 224 de la paroi de connexion 22. La pression est toutefois principalement exercée par la couche de matière élastique compressible 121 du revêtement 12 positionnée au niveau de la surface d'épaisseur 13 et dont le matériau élastique moussé fait face à la surface 223 de la paroi de connexion 22. De façon complémentaire, selon un exemple de construction spécifique de cette variante, la surface de la paroi de connexion 22 présente une forme ou un relief arrangé réalisant un élargissement au moins localisé de la paroi de connexion 22 de sorte que l'appui et la pression de la paroi de connexion 22 contre la couche de matière élastique compressible 121 du revêtement 12 positionnée au niveau de la surface d'épaisseur 13 se trouvent accentués.

Selon un exemple se rapportant à une autre variante de construction de la planche de bord 1 selon l'invention et susceptible d'être combinée avec l'une ou l'autre des variantes précédemment détaillées, la jonction entre la paroi de connexion 22 et la surface d'épaisseur 13 de la planche de bord 1 positionnée en vis-à-vis comprend au moins une portion 1222 de la couche de revêtement de surface 122 superposée au volet d'airbag 2, une partie de cette portion 1222 étant repliée contre la surface 223 de la paroi de connexion 22. Selon cette variante de construction, la surface 223 de la paroi de connexion 22 et la surface d'épaisseur 13 de la planche de bord 1 sont séparées par au moins une partie repliée de la portion 1222 du revêtement de surface 122 qui, positionné par-dessus le panneau support 21 et le bord libre 222 de la paroi de connexion 22, correspond à un débord depuis la surface extérieure de la planche de bord 1 qui se positionne en insertion entre la surface 223 de la paroi de connexion 22 et la surface d'épaisseur 13 de la planche de bord 1. Ce positionnement d'une partie repliée de la portion 1222 du revêtement de surface 122 entre la surface 223 de la paroi de connexion 22 et la surface d'épaisseur 13 de la planche de bord 1 réalise ainsi une épaisseur supplémentaire contre la paroi de connexion 22. Cette épaisseur supplémentaire que forme le repliement de la portion 1222 du revêtement de surface 122 opère ainsi une pression accentuée entre la paroi de connexion 22 et la surface d'épaisseur 13 disposée en vis-à-vis. Dans le cadre de cette variante de construction, une partie du bord de la portion de revêtement de surface 122 disposée par-dessus le volet 2 se trouve masquée par insertion au niveau de la jonction entre la surface 223 de la paroi de connexion 22 et la surface d'épaisseur 13 de la planche de bord 1. La jonction entre la surface 223 de la paroi de connexion 22 et la surface d'épaisseur 13 de la planche de bord 1 est alors utilisée dans le cadre d'un arrangement esthétique du revêtement de surface 122 sur la planche de bord 1.

Selon un exemple se rapportant à une autre variante de construction de la planche de bord 1 selon l'invention et susceptible d'être combinée avec la variante précédemment détaillée, la partie de la portion 1222 de couche de revêtement 122 repliée contre la surface 223 de la paroi de connexion 22 est liée par au moins une jonction 1223 séparable à une partie d'une seconde portion 1221 de la couche de revêtement 122 superposée à une portion de la planche de bord 1 juxtaposée au volet d'airbag 2 et repliée contre la surface d'épaisseur 13 de planche de bord 1 positionnée en vis-à-vis de la paroi de connexion 22. Selon cette variante de construction, la paroi de connexion 22 et la surface d'épaisseur 13 située en vis-à-vis de cette paroi de connexion 22 sont séparées par des repliements des portions 1221, 1222 respectives du revêtement de surface 122 qui se rejoignent entre la paroi de connexion 22 et la surface d'épaisseur 13. Ainsi, au moins une partie de la portion 1222 du revêtement de surface 122, positionné par-dessus le panneau support 21 et le bord libre 222 de la paroi de connexion 22, correspond à un débord de la surface extérieure de la planche de bord 1 qui est inséré entre la surface 223 de la paroi de connexion 22 et la surface d'épaisseur 13 de la planche de bord 1. De même, au moins une partie de la portion 1221 du revêtement de surface 122 positionné par-dessus la partie de la structure support 11 juxtaposée au panneau support 2 du volet et à sa paroi de connexion 22, forme un débord disposé autour du bord libre de la surface d'épaisseur 13 et inséré entre la surface 223 de la paroi de connexion 22 et la surface d'épaisseur 13 de la planche de bord 1. L'insertion de ces deux parties repliées des portions 1221, 1222 du revêtement de surface 122 entre la surface 223 de la paroi de connexion 22 et la surface d'épaisseur 13 de la planche de bord 1 positionne une double épaisseur supplémentaire contre la paroi de connexion 22. Ainsi, la pression entre la paroi de connexion 22 et la surface d'épaisseur 13 disposée en vis-à-vis se trouve accentuée. Dans le cadre de cette variante de construction, le revêtement de surface 122 est susceptible d'être réalisé sous la forme d'au moins deux pièces, par exemple disposées selon un arrangement destiné à la réalisation d'une distribution esthétique sur la planche de bord 1. Ainsi, la jonction entre les deux pièces du revêtement de surface 122 et plus particulièrement entre les parties repliées des portions 1221, 1222 du revêtement de surface 122 correspondant aux débords respectifs positionnés en insertion, est arrangée pour être superposée avec la jonction entre la paroi de connexion 22 du volet 2 et la surface d'épaisseur 13 de la planche de bord 1. Un tel arrangement permet ainsi conjointement, d'une part, d'opérer une optimisation de la pression exercée entre la paroi de connexion 22 et la surface d'épaisseur 13 de la planche de bord 1 et, d'autre part, de masquer la jonction entre le bord 211 du panneau support 21 du volet 2 et le reste de la planche de bord 1 en l'intégrant dans un raccord esthétique entre deux portions du revêtement de surface 122. A titre d'exemple, lorsque le revêtement de surface 122 comprend un nombre plus élevé de portions assemblées, cette jonction entre le bord 211 du panneau support 21 du volet 2 est susceptible d'être intégrée au niveau d'un raccord entre au moins deux portions particulières parmi un grand nombre de portions du revêtement de surface 122.

Selon un exemple se rapportant à une autre variante de construction de la planche de bord 1 selon l'invention et susceptible de réaliser une alternative à la variante précédemment détaillée, la jonction 1223 séparable entre les deux portions 1221, 1222 de la couche de revêtement de surface 122 est réalisée par une couture de jonction et/ou une jonction auto-agrippante textile de type crochets et boucles et/ou une jonction adhésive. Dans le cadre de cette variante de construction, la jonction entre les portions 1221, 1222 du revêtement de surface 122 correspondant aux débords respectifs positionnés en insertion entre la surface 223 de la paroi de connexion 22 et la surface d'épaisseur 13 de la planche de bord 1 est complétée par un moyen d'assemblage qui opère une fixation entre eux des bords respectifs de chacune des portions 1221, 1222 du revêtement de surface 122. Ce moyen d'assemblage qui fixe les deux portions 1221, 1222 du revêtement de surface 122 opère une jonction de ces portions 1221, 1222 en complément du pincement des deux portions 1221, 1222 par la paroi de connexion 22 du volet 2 et la surface d'épaisseur 13 de la planche de bord 1 en appui l'une contre l'autre. Par ailleurs, ce moyen d'assemblage étant positionné entre la paroi de connexion 22 et la surface d'épaisseur 13, il positionne également une épaisseur supplémentaire contre la paroi de connexion 22 en insertion entre les deux surfaces 13, 223 en pression l'une contre l'autre. Ce moyen d'assemblage permet ainsi d'opérer une optimisation de la pression exercée entre la paroi de connexion 22 et la surface d'épaisseur 13 de la planche de bord. De façon préférée, ce moyen d'assemblage est sélectionné pour permettre une fixation réversible des bords de chacune des portions 1221, 1222 par la paroi de connexion 22 de sorte que le moyen d'assemblage, d'une part, soit fonctionnel en absence d'effort exercé par le coussin d'airbag sur la face du volet 2 qui fait face au canal d'airbag 4 et, d'autre part, soit en mesure de se détacher sous l'effet d'un effort de traction séparant les deux portions 1221, 1222 assemblées du revêtement de surface 122 lors d'un déplacement du volet 2 qui fait face au canal d'airbag 4. Ce moyen d'assemblage est ainsi susceptible de prendre la forme d'une couture fusible adaptée pour se rompre sans difficulté sous l'effet d'une tension exercée au niveau de l'une des pièces qu'elle maintient assemblées. De façon alternative, ce moyen d'assemblage est susceptible de prendre la forme de deux bandes textiles complémentaires auto-agrippantes de type crochets et boucles telles que celles développées par la société Velcro Companies. Chacune des deux portions 1221, 1222 du revêtement de surface 122 porte alors une bande textile respective permettant, à la fois, un assemblage facilité des deux portions 1221, 1222 du revêtement de surface 122 et leur séparation sous l'effet d'un déplacement du volet 2 lors du déploiement du coussin d'airbag. De façon alternative, ce moyen d'assemblage est également susceptible de prendre la forme d'une bande adhésive. Cette bande adhésive se trouve alors positionnée pour adhérer à chacune des deux portions 1221, 1222 du revêtement de surface 122 facilitant l'assemblage des deux portions 1221, 1222 du revêtement de surface 122. L'adhésif de la bande est toutefois sélectionné pour assurer un maintien assemblé des portions 1221, 1222 du revêtement de surface 122 tout en permettant leur détachement et leur séparation sous l'effet d'un déplacement du volet 2 lors du déploiement du coussin d'airbag.

Selon un exemple se rapportant à une autre variante de construction de la planche de bord 1 selon l'invention et susceptible d'être combinée avec l'une ou l'autre des variantes précédemment détaillées, la jonction 1223 séparable est disposée, d'une part, au niveau de la paroi de connexion 22 et, d'autre part, au niveau des bords latéraux 213 du panneau support 21. Dans le cadre de cette variante de construction, la jonction 1223 séparable est positionnée de façon à opérer un assemblage du volet 2 avec le reste de la planche de bord 1 au niveau de plusieurs de ses bords ou de ses côtés. Cette construction permet ainsi d'opérer une jonction entre des portions 1221, 1222 du revêtement de surface 122 au niveau de plusieurs bords latéraux 213 du volet 2 de façon similaire à la jonction réalisée au niveau de la paroi de connexion 22. Cette construction permet également de bénéficier des avantages et des effets apportés par des jonctions 1223 séparables le long de plusieurs bords 211, 213 du volet 2.

Selon un exemple se rapportant à une autre variante de construction de la planche de bord 1 selon l'invention et susceptible d'être combinée avec l'une ou l'autre des variantes précédemment détaillées, la couche de revêtement de surface 122 est continue entre le volet 2 d'airbag et le reste de la planche de bord 1 de sorte que la couche de revêtement 122 recouvre la jonction entre la paroi de connexion 22 et la surface d'épaisseur 13 de planche de bord 1 positionnée en vis-à-vis. Dans le cadre de cette variante de construction, la couche de revêtement de surface 122 présente une structure unitaire positionnée de part et d'autre de la jonction entre le volet 2 d'airbag et le reste de la planche de bord 1. Cette couche de revêtement de surface 122 est ainsi positionnée par-dessus le bord libre de la surface d'épaisseur 13, le bord libre 222 de la paroi de connexion 22 et/ou les bords libres 231, 232 respectifs de chacune des parois latérales 23 de sorte que la jonction entre le volet 2 d'airbag et le reste de la planche de bord 1 se trouve masquée à la vue d'un passager de l'habitacle. Il convient de relever que cette variante de construction est préférentiellement mise en œuvre dès lors que la couche de revêtement de surface 122 intègre des propriétés de rupture ou de déchirabilité sous l'effet d'un effort exercé par un déplacement du volet 2 par rapport au reste de la planche de bord 1. Ces propriétés sont susceptibles de provenir de la composition chimique de la couche de revêtement de surface 122 et/ou de la construction mécanique de cette couche de revêtement de surface 122 par intégration, par exemple, d'une fragilité localisée dans l'épaisseur de cette couche de revêtement 122.

Selon un exemple se rapportant à une autre variante de construction de la planche de bord 1 selon l'invention et susceptible d'être combinée avec l'une ou l'autre des variantes précédemment détaillées, la surface d'épaisseur 13 de la planche de bord 1 positionnée en vis-à-vis de la paroi de connexion 22 est portée par le bord intérieur d'un cadre du volet 2 d'airbag. Selon cette variante de construction, au moins une portion de la planche de bord 1 positionnée sur une partie de la périphérie du volet 2 est réalisée par un cadre qui entoure toute ou partie de la périphérie du volet 2. De façon préférée, ce cadre est positionné le long des différents bords du volet 2 détachés du reste de la planche de bord 1. Selon un exemple se rapportant à une spécificité de construction, le cadre est relié au volet 2 par l'intermédiaire d'un moyen charnière 3. La surface d'épaisseur 13 et les portions superposées des couches de revêtement 12 qui réalisent cette surface d'épaisseur 13, c'est-à-dire notamment la couche de matière élastique compressible 121 et, éventuellement, la couche de revêtement de surface 122, sont alors portées, directement ou indirectement, par ce cadre. Il convient de relever que selon un exemple de variante spécifique de cette variante de construction, ce cadre du volet 2 est susceptible d'être réalisé par un élément structurel monté et fixé sur le reste de la planche de bord 1 ; cet élément structurel étant, par exemple, rattaché au canal d'airbag 4.

Selon un exemple se rapportant à une autre variante de construction de la planche de bord 1 selon l'invention et susceptible d'être combinée avec l'une ou l'autre des variantes précédemment détaillées, la surface d'épaisseur 13 de la planche de bord 1 positionnée en vis-à-vis de la paroi de connexion 22 est portée par le bord d'un second volet d'airbag. Selon cette variante de construction la planche de bord 1 comprend au moins deux volets 2 juxtaposés en vis-à-vis l'un de l'autre et séparés par une ligne d'ouverture. Ces deux volets 2 sont ainsi disposés de façon à opérer un déplacement ou pivotement dans des directions opposées lors du déploiement du coussin d'airbag. Ce second volet d'airbag comprend également un panneau support associé à la planche de bord 1 par l'intermédiaire d'un moyen charnière. La surface du panneau support de ce second volet est alors également surmontée d'un revêtement 12 comprenant au moins une couche de matière élastique compressible 121 et une couche de revêtement de surface 122. La surface de la portion de revêtement 12 positionnée en vis-à-vis de la paroi de connexion 22 du premier volet 2 d'airbag forme ainsi la surface d'épaisseur 13 avec laquelle interagit ou coopère, directement ou indirectement, le premier volet 2 de la planche de bord. Selon un exemple de variante spécifique de cette variante de construction, le panneau support de ce second volet est susceptible d'être associé à une paroi de connexion propre à ce second volet, de sorte que cette paroi de connexion du second volet réalise une surface d'épaisseur 13 de la planche de bord 1 positionnée en vis-à-vis de la paroi de connexion 22 du premier volet 2 pour coopérer avec celle-ci.

Selon un exemple se rapportant à une autre variante de construction de la planche de bord 1 selon l'invention et susceptible d'être combinée avec l'une ou l'autre des variantes précédemment détaillées, la jonction entre la paroi de connexion 22 et la surface d'épaisseur 13 de planche de bord 1 positionnée en vis-à-vis de cette paroi de connexion 22 est localisée au niveau d'une arête 14 de la planche de bord 1 formée par la réunion de la surface extérieure 25 du volet 2 d'airbag et d'une portion juxtaposée de la surface extérieure 15 de la planche de bord 1, ces deux surfaces extérieures 15, 25 réalisant un angle aigu dans un plan en section perpendiculaire à la paroi du panneau support 21. Selon cette variante de construction, l'arrangement des surfaces extérieures 15, 25 respectives de la planche de bord 1 et du volet 2 selon un arrangement formant un angle aigu permet de positionner la jonction entre le volet 2 et le reste de la planche de bord 1 au niveau d'une arête 14. Un tel positionnement permet de masquer la jonction des parties de la planche de bord 1 en l'intégrant dans l'architecture tridimensionnelle de la planche de bord 1. Cette construction permet également, le cas échéant le positionnement d'une jonction entre ces deux parties de la planche de bord 1 au niveau d'une portion de l'architecture tridimensionnelle de la planche de bord 1 justifiant une jonction entre deux portions juxtaposées de la couche de revêtement de surface 122 du revêtement 12. Par ailleurs, l'arrangement formant un angle aigu est préférentiellement orienté de sorte que l'angle soit ouvert en direction du canal d'airbag 4. Une telle orientation des deux parties de la planche de bord 1 permet ainsi un positionnement du volet 2 par rapport à l'axe principal du canal d'airbag 4 selon une inclinaison de sorte que la surface du volet 2 orientée vers l'intérieur du canal d'airbag 4 présente au moins une composante parallèle à l'axe principal du canal d'airbag 4. Cet arrangement permet ainsi, d'une part, d'éviter un impact strictement frontal du coussin d'airbag en déploiement contre la surface du volet 2 de sorte que l'effort du coussin d'airbag contre la surface du volet 2 tend principalement à écarter le volet 2 en l'accompagnant dans une déviation hors de sa trajectoire de déploiement depuis le canal d'airbag 4 et, d'autre part, de réduire la course nécessaire du volet 2 pour libérer l'ouverture du canal d'airbag 4.

Selon un exemple se rapportant à une autre variante de construction de la planche de bord 1 selon l'invention et susceptible d'être combinée avec l'une ou l'autre des variantes précédemment détaillées, le moyen charnière 3 est formé par au moins une portion de la couche de revêtement 12. Selon cette variante de construction, une ou plusieurs couches 121, 122 du revêtement 12 assurent la jonction structurelle entre le panneau support 21 du volet 2 et une portion du reste de la surface juxtaposée de la structure support rigide 11 de la planche de bord 1. Cette jonction structurelle est configurée pour, d'une part, être suffisamment souple et/ou élastique pour permettre sa déformation lors du fonctionnement du moyen charnière 3 et du pivotement du volet 2 par rapport à la planche de bord 1 et, d'autre part, être suffisamment solide pour résister à la déchirure en cas d'effort de traction exercé sur ce revêtement 12, notamment lorsqu'un effort est exercé par le coussin d'airbag sur la face du volet 2 qui fait face au canal d'airbag 4. Dans ces conditions, la solidité de cette jonction structurelle permet d'éviter que le volet 2 ne se détache du reste de la planche de bord 1 lors du déploiement du coussin d'airbag. Selon un exemple de variante spécifique de cette variante de construction, la portion de la couche de revêtement 12 qui participe à la formation de ce moyen charnière 3 est complétée par un élément de renfort intégré dans l'épaisseur du revêtement 12 et/ou entre différentes couches de matières de ce revêtement 12.

Selon un exemple se rapportant à une autre variante de construction de la planche de bord 1 selon l'invention et susceptible d'être combinée avec l'une ou l'autre des variantes précédemment détaillées, le moyen charnière 3 est formé par au moins un élément surmoulé sur au moins une portion de la surface du panneau support 21 localisée au niveau du bord opposé au bord associé à la paroi de connexion 22. Selon cette variante de construction, cet élément surmoulé permet de réaliser une jonction mécanique entre le volet 2 et le reste de la structure support rigide 11 de la planche de bord 1 de sorte que le volet 2 et la structure support rigide 11 de la planche de bord 1 forment un ensemble structurel unitaire. Cet élément surmoulé est configuré pour présenter des propriétés mécaniques combinant à la fois souplesse et/ou élasticité et solidité pour permettre de remplir efficacement sa fonction de charnière du volet 2 lors du déploiement du coussin d'airbag. Il convient de relever que cet élément surmoulé qui participe à la réalisation du moyen charnière 3 est susceptible d'être combiné avec l'une ou l'autre des alternatives de construction du moyen charnière 3 précédemment détaillées.

Selon un exemple se rapportant à une autre variante de construction de la planche de bord 1 selon l'invention et susceptible d'être combinée avec l'une ou l'autre des variantes précédemment détaillées, le moyen charnière 3 est formé par au moins un élément flexible fixé sur au moins une portion de la surface du panneau support 21 localisée au niveau du bord opposé au bord associé à la paroi de connexion 22. Cet élément flexible est susceptible d'être réalisé par un élément fixé à la fois au panneau support 21 du volet 2 et à la structure support 11 de la planche de bord 1 de façon à être recouvert par le revêtement 12 et/ou au moins l'une des couches de matières de ce revêtement 12. Aussi, dans le cadre du déploiement du coussin d'airbag, cet élément flexible permet le déplacement ou pivotement du volet 2 par rapport à la planche de bord 1 tout en conservant le volet 2 assemblé avec la structure support rigide 11 de la planche de bord 1. Il convient de relever que cet élément flexible qui participe à la réalisation du moyen charnière 3 est susceptible d'être combiné avec l'une ou l'autre des alternatives de construction du moyen charnière 3 précédemment détaillées.

Selon un exemple se rapportant à une autre variante de construction de la planche de bord 1 selon l'invention et susceptible d'être combinée avec l'une ou l'autre des variantes précédemment détaillées, le moyen charnière 3 est formé par au moins une réduction de matière au niveau d'une portion de l'épaisseur de la surface du panneau support 21 localisée au niveau du bord opposé au bord associé à la paroi de connexion 22. Selon cette variante de construction, le volet 2 et le reste de la structure support rigide 11 de la planche de bord 1 réalisent une continuité structurelle. La diminution de l'épaisseur d'une portion d'extrémité du panneau support 21 du volet 2 permet d'opérer une réduction localisée de la rigidité du panneau support 21 autorisant une déformation de la portion du panneau support 21, en particulier dans le cadre du déploiement du coussin d'airbag avec un pivotement du volet 2 autour d'un axe passant par cette réduction de matière du panneau support 21 du volet 2.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Planche de bord (1) intégrant au moins un volet (2) d'airbag, la planche de bord (1) comprenant, d'une part, une structure support (11) rigide et, d'autre part, un revêtement (12) superposé sur cette structure support (11), le revêtement (12) comprenant au moins une couche de matière élastique compressible (121) et une couche de revêtement de surface (122), **caractérisée en ce que** le volet (2) d'airbag de la planche de bord (1) comprend :
- un panneau support (21) qui porte le revêtement (12) de la planche de bord (1) positionné au niveau du volet (2) d'airbag, ce panneau support (21) étant relié, directement ou indirectement, au reste de la planche de bord (1) par au moins un moyen charnière (3),
- une paroi de connexion (22) positionnée le long d'au moins une portion du bord (211) du panneau support (21) situé à l'opposé du moyen charnière (3) par rapport au panneau support (21), cette paroi de connexion (22) étant configurée pour interagir avec une surface d'épaisseur (13) de la planche de bord (1) positionnée en vis-à-vis de la paroi de connexion (22) et disposée dans le prolongement d'au moins une partie du canal d'airbag (4).

2. Planche de bord (1) selon la revendication 1, **caractérisée en ce que** la paroi de connexion (22) du volet (2) comprend une hauteur ajustée pour être en contact contre la au moins une couche de matière élastique compressible (121) portée par le panneau support (21) et **en ce qu'**au moins une portion d'un bord libre (222) de cette paroi de connexion (22) soit au plus en contact contre la face orientée vers le panneau support (21) de la couche de revêtement de surface (122).

3. Planche de bord (1) selon une des revendications précédentes, **caractérisée en ce que** la paroi de connexion (22) est prolongée par des parois latérales (23) respectivement positionnées le long d'au moins une portion de chacun des bords latéraux (213) du panneau support (21) situés de part et d'autre du bord (211) du panneau support (21) associé à la paroi de connexion (22).

4. Planche de bord (1) selon la revendication 3, **caractérisée en ce que** les parois latérales (23) présentent des hauteurs respectives similaires, voire identiques, à celle de la paroi de connexion (22).

5. Planche de bord (1) selon une des revendications précédentes, **caractérisée en ce que** la jonction entre la surface (223) de la paroi de connexion (22) et la surface d'épaisseur (13) de la planche de bord (1) positionnée en vis-à-vis comprend au moins un contact, direct ou indirect, en pression de ces deux surfaces (13, 223).

6. Planche de bord (1) selon une des revendications précédentes, **caractérisée en ce que** la jonction entre la paroi de connexion (22) et la surface d'épaisseur (13) de la planche de bord (1) positionnée en vis-à-vis comprend au moins une partie de la portion (1222) de la couche de revêtement de surface (122) superposée au volet d'airbag (2) et repliée contre la surface (223) de la paroi de connexion (22).

7. Planche de bord (1) selon la revendication 6, **caractérisée en ce que** la partie de la portion (1222) de couche de revêtement (122) repliée contre la surface (223) de la paroi de connexion (22) est liée par au moins une jonction (1223) séparable à une partie d'une seconde portion (1221) de la couche de revêtement (122) superposée à une portion de la planche de bord (1) juxtaposée au volet d'airbag 2 et repliée contre la surface d'épaisseur (13) de planche de bord (1) positionnée en vis-à-vis de la paroi de connexion (22).

8. Planche de bord (1) selon la revendication 7, **caractérisée en ce que** la jonction (1223) séparable entre les deux portions (1221, 1222) de la couche de revêtement de surface (122) est réalisée par une couture de jonction et/ou une jonction auto-agrippante textile de type crochets et boucles et/ou une jonction adhésive.

9. Planche de bord (1) selon une des revendications 7 et 8, **caractérisée en ce que** la jonction (1223) séparable est disposée, d'une part, au niveau de la paroi de connexion (22) et, d'autre part, au niveau des bords latéraux (213) du panneau support (21).

10. Planche de bord (1) selon une des revendications 1 à 5, **caractérisée en ce que** la couche de revêtement de surface (122) est continue entre le volet (2) d'airbag et le reste de la planche de bord (1) de sorte que la couche de revêtement (122) recouvre la jonction entre la paroi de connexion (22) et la surface d'épaisseur (13) de planche de bord (1) positionnée en vis-à-vis.

11. Planche de bord (1) selon une des revendications précédentes, **caractérisée en ce que** la surface d'épaisseur de la planche de bord (1) positionnée en vis-à-vis de la paroi de connexion (22) est portée par le bord intérieur d'un cadre du volet (2) d'airbag.

12. Planche de bord (1) selon une des revendications précédentes, **caractérisée en ce que** la surface d'épaisseur (13) de la planche de bord (1) positionnée en vis-à-vis de la paroi de connexion (22) est portée par le bord d'un second volet d'airbag.

13. Planche de bord (1) selon une des revendications précédentes, **caractérisée en ce que** la jonction entre la paroi de connexion (22) et la surface d'épaisseur (13) de planche de bord (1) positionnée en vis-à-vis de cette paroi de connexion (22) est localisée au niveau d'une arête (14) de la planche de bord (1) formée par la réunion de la surface extérieure (25) du volet (2) d'airbag et d'une portion juxtaposée de la surface extérieure (15) de la planche de bord (1), ces deux surfaces extérieures (15, 25) réalisant un angle aigu dans un plan en section perpendiculaire à la paroi du panneau support (21).

14. Planche de bord (1) selon une des revendications précédentes, **caractérisée en ce que** le moyen charnière (3) est formé par au moins une portion de la couche de revêtement (12).

15. Planche de bord (1) selon une des revendications précédentes, **caractérisée en ce que** le moyen charnière (3) est formé par au moins un élément surmoulé sur au moins une portion de la surface du panneau support (21) localisée au niveau du bord opposé au bord associé à la paroi de connexion (22).

16. Planche de bord (1) selon une des revendications précédentes, **caractérisée en ce que** le moyen charnière (3) est formé par au moins un élément flexible fixé sur au moins une portion de la surface du panneau support (21) localisée au niveau du bord opposé au bord associé à la paroi de connexion (22).

17. Planche de bord (1) selon une des revendications précédentes, **caractérisée en ce que** le moyen charnière (3) est formé par au moins une réduction de matière au niveau d'une portion de l'épaisseur de la surface du panneau support (21) localisée au niveau du bord opposé au bord associé à la paroi de connexion (22).
